# EUROPÄISCHE PATENTSCHRIFT

(11) **EP 2 294 376 B1**
(45) Veröffentlichungstag und Bekanntmachung des Hinweises auf die Patenterteilung: **20.06.2012**
(21) Anmeldenummer: 09769058.0
(22) Anmeldetag: 27.04.2009
(51) Int. Cl.: G01L 9/00, G01L 13/02, G01L 19/06, G01L 7/08, G01M 15/10

(54) **DRUCKSENSORANORDNUNG**
PRESSURE SENSOR ASSEMBLY
ENSEMBLE CONSTITUANT UN CAPTEUR DE PRESSION

(30) Priorität: 26.06.2008 DE 102008002671
(43) Veröffentlichungstag der Anmeldung: 16.03.2011
(73) Patentinhaber: Robert Bosch GmbH, 70442 Stuttgart (DE)
(72) Erfinder: DUKART, Anton, 70839 Gerlingen (DE); MOERSCH, Gilbert, 70563 Stuttgart (DE)
(86) Internationale Anmeldenummer: PCT/EP2009/055021
(87) Internationale Veröffentlichungsnummer: WO 2009/156209

(56) Entgegenhaltungen:
- WO-A-2006/023987
- US-A- 5 796 007
- US-A1- 2003 200 813
- US-A1- 2007 044 547

## Beschreibung

### Stand der Technik

Die Erfindung betrifft eine Drucksensoranordnung mit einem Druckrohr, in dem eine Membran als Druckaufnehmer angeordnet ist, und mit Mitteln zum Erfassen der Membrandeformationen.

Derartige Sensoranordnungen werden beispielsweise im Rahmen der Überwachung von Diesel-Partikelfiltern eingesetzt, um den Abgasdruck vor und hinter dem Partikelfilter zu messen und so den Stand seiner Beladung zu ermitteln. Auf der Grundlage dieser Informationen kann dann u. a. das zyklische Freibrennen des Partikelfilters gesteuert werden. Für diese Anwendung sollte die Sensoranordnung einen Messbereich von etwa 1 bar haben.

Es ist bekannt, zur Überwachung von Diesel-Partikelfiltern Sensorelemente zu verwenden, die als Differenzdrucksensoren ausgelegt sind. Die Druckerfassung erfolgt hier mit Hilfe einer Membran, die beidseitig mit Druck beaufschlagt wird. Diese Sensoranordnung ist zwar kostengünstig, erweist sich aber in der Praxis als problematisch, da nicht nur die Membranrückseite sondern auch die Membranvorderseite dem Messmedium ausgesetzt ist. In der Regel sind auf der Membranvorderseite Schaltungselemente zum Umwandeln der Membrandeformationen in elektrische Signale angeordnet, wie z.B. eine piezoresistive Messbrücke. Durch den Kontakt mit aggressiven Messmedien wird die Funktionsfähigkeit einer solchen Schaltungsanordnung beeinträchtigt.

### Offenbarung der Erfindung

Mit der vorliegenden Erfindung wird eine kostengünstige Drucksensoranordnung der eingangs genannten Art vorgeschlagen, die eine räumliche Trennung zwischen dem auf die Membran einwirkenden Messmedium und den Mitteln zum Erfassen der Membrandeformationen ermöglicht.

Dazu umfasst die Membran der erfindungsgemäßen Drucksensoranordnung mindestens zwei in einem Winkel zueinander orientierte Membranabschnitte. Ein erster Membranabschnitt ist als Trennmembran im Querschnitt des Druckrohrs angeordnet und wird mit dem zu erfassenden Druck bzw. dem Messmedium beaufschlagt, während mindestens ein zweiter Membranabschnitt als Seitenwandmembran einen Bereich der Wandung des Druckrohrs bildet. Die Mittel zum Erfassen der Membrandeformationen sind erfindungsgemäß auf der Außenseite des Druckrohrs auf der Seitenwandmembran angeordnet.

Erfindungsgemäß ist zunächst erkannt worden, dass innerhalb eines Druckrohres auch nicht flächige Membranen zur Druckerfassung eingesetzt werden können und dass sich dafür insbesondere Membranen mit mehreren zueinander abgewinkelten Membranabschnitten eignen. Bei derartigen Membranen übertragen sich nämlich Deformationen eines Membranabschnitts auch auf die angrenzenden Membranabschnitte. Dies wird bei der erfindungsgemäßen Drucksensoranordnung ausgenutzt, indem ein Membranabschnitt als Trennmembran im Querschnitt des Druckrohrs angeordnet wird und ein dazu abgewinkelter Membranabschnitt als Seitenwandmembran einen Bereich der Druckrohrwandung bildet. Die zu erfassenden Druckverhältnisse innerhalb des Druckrohrs führen in erster Linie zu einer Deformation der Trennmembran. Diese Deformation überträgt sich auf die Seitenwandmembran, so dass die dadurch bedingten Deformationen der Seitenwandmembran ebenfalls die Druckverhältnisse innerhalb des Druckrohrs wiedergeben. Die Seitenwandmembran steht aber im Gegensatz zur Trennmembran nur einseitig in Kontakt zu dem Messmedium innerhalb des Druckrohrs. Erfindungsgemäß wird deshalb vorgeschlagen, die Mittel zum Erfassen der Membrandeformationen auf der Außenseite der Seitenwandmembran anzuordnen. Auf diese Weise kann die erfindungsgemäße Drucksensoranordnung sowohl als Absolutdrucksensor eingesetzt werden als auch als Differenzdrucksensor, je nach dem, ob auf der einen Seite der Trennmembran ein definierter Referenzdruck anliegt oder die Trennmembran beidseitig mit einem Messdruck beaufschlagt wird.

Um eine möglichst große Deformation der Seitenwandmembran bei Deformation der Trennmembran zu erzielen, sind diese beiden Membranabschnitte bevorzugt im Wesentlichen senkrecht zueinander orientiert. Dafür ist es außerdem vorteilhaft, wenn die Trennmembran möglichst mittig auf die Seitenwandmembran/en trifft, wenn die Membran also im Schnitt T-förmig oder H-förmig ausgebildet ist.

In einer bevorzugten Ausführungsform der erfindungsgemäßen Drucksensoranordnung sind das Druckrohr, die Trennmembran und die mindestens eine Seitenwandmembran einstückig aus einem einheitlichen Material gefertigt. Dabei kann es sich je nach den Druck- und Temperaturverhältnissen am Einsatzort um ein Halbleitermaterial, wie Silizium, Metall oder Kunststoff handeln. Der Messbereich der erfindungsgemäßen Drucksensoranordnung hängt vom Material der Membran ab und kann durch die Wahl der Membranabmessungen, insbesondere der Dicke und des Durchmessers der Trennmembran und der Seitenwandmembran, eingestellt werden.

Wie bereits erläutert werden bei der erfindungsgemäßen Drucksensoranordnung die Deformationen der Seitenwandmembran erfasst. In einer bevorzugten Variante der Erfindung werden dazu vier resistive Dehnmesselemente verwendet, die auf der dem Messmedium abgewandten Seite der Seitenwandmembran angeordnet sind und zu einer Wheatstoneschen Brücke verschaltet sind. Dadurch kann der Gleichanteil der beiderseits auf die Trennmembran wirkenden Drücke, der ebenfalls zu einer Deformation der Seitenwandmembran führt, kompensiert werden. Auch Temperatureinflüsse können so kompensiert werden.

### Kurze Beschreibung der Zeichnungen

Wie bereits voranstehend erörtert, gibt es verschiedene Möglichkeiten, die Lehre der vorliegenden Erfindung in vorteilhafter Weise auszugestalten und weiterzubilden. Dazu wird einerseits auf die dem unabhängigen Patentanspruch nachgeordneten Patentansprüche und andererseits auf die nachfolgende Beschreibung eines Ausführungsbeispiels der Erfindung anhand der Zeichnungen verwiesen.
- Fig. 1: zeigt einen schematischen Längsschnitt durch eine erfindungsgemäße Drucksensoranordnung 10,
- Fig. 2: zeigt einen vergrößerten Ausschnitt der Schnittdarstellung in Fig. 1,
- Fig. 3: zeigt eine schematische Draufsicht auf die in Fig. 2 dargestellte Seitenwandmembran mit einer Anordnung von vier Dehnmesselementen,
- Fig. 4: zeigt ein Schaltbild mit den in den Figuren 2 und 3 dargestellten Dehnmesselementen und
- Fig. 5: zeigt eine Möglichkeit der Serienfertigung von erfindungsgemäßen Drucksensoranordnungen.

### Ausführungsformen der Erfindung

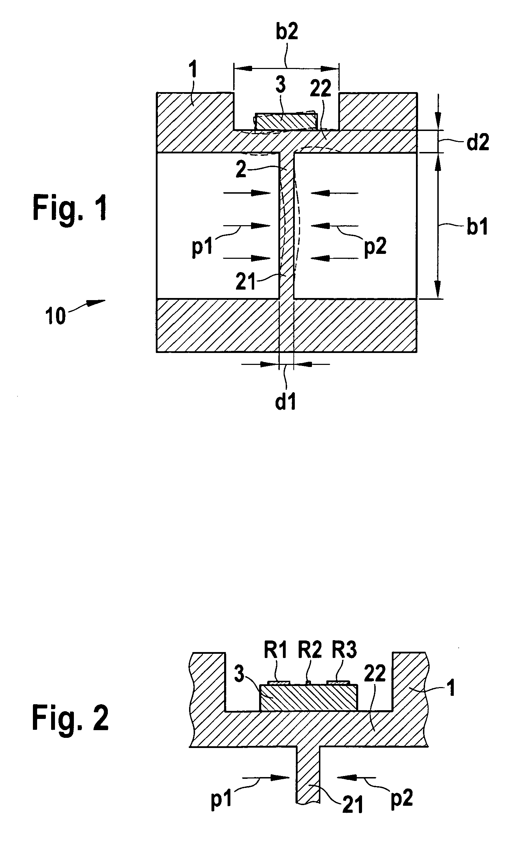

Die in Fig. 1 dargestellte Drucksensoranordnung 10 ist in Form eines Druckrohrs 1 realisiert, in dem eine Membran 2 als Druckaufnehmer angeordnet ist. Erfindungsgemäß umfasst die Membran 2 zwei in einem Winkel zueinander orientierte Membranabschnitte 21 und 22. Der Membranabschnitt 21 ist als Trennmembran im Querschnitt des Druckrohrs 1 angeordnet, während der Membranabschnitt 22 als Seitenwandmembran einen Bereich der Wandung des Druckrohrs 1 bildet. Die Trennmembran 21 und die Seitenwandmembran 22 sind im hier dargestellten Ausführungsbeispiel im Wesentlichen senkrecht zueinander orientiert, so dass die Membran 2 insgesamt im Schnitt T-förmig ausgebildet ist.

Die Drucksensoranordnung 10 dient als Differenzdrucksensor, Die beiden Enden des Druckrohrs 1 bilden hier jeweils einen Druckanschluss. Dementsprechend wird die Trennmembran 21 auf der einen Seite mit einem Messdruck p1 und auf der anderen Seite mit einem Messdruck p2 beaufschlagt. Im hier dargestellten Fall ist p1 größer als p2, so dass die Deformation der Trennmembran 21 also der Differenz p1-p2 entspricht. Diese Deformation der Trennmembran 21 überträgt sich auf die Seitenwandmembran 22 und resultiert in einer asymmetrische Verformung der Seitenwandmembran 22, die hier ebenfalls die Druckverhältnisse innerhalb des Druckrohrs 1 wiedergibt. Erfindungsgemäß wird diese Deformation der Seitenwandmembran 22 erfasst und in elektrische Signale umgewandelt. Dazu ist ein Chip 3 mit vier Dehnungsaufnehmern auf der Seitenwandmembran 22 angeordnet, und zwar auf der Außenseite des Druckrohrs 1, so dass dieser Chip 3 nicht mit den Messmedien in Kontakt tritt. Der druckbeaufschlagte Zustand der Membran 2 ist in Fig. 1 gestrichelt dargestellt.

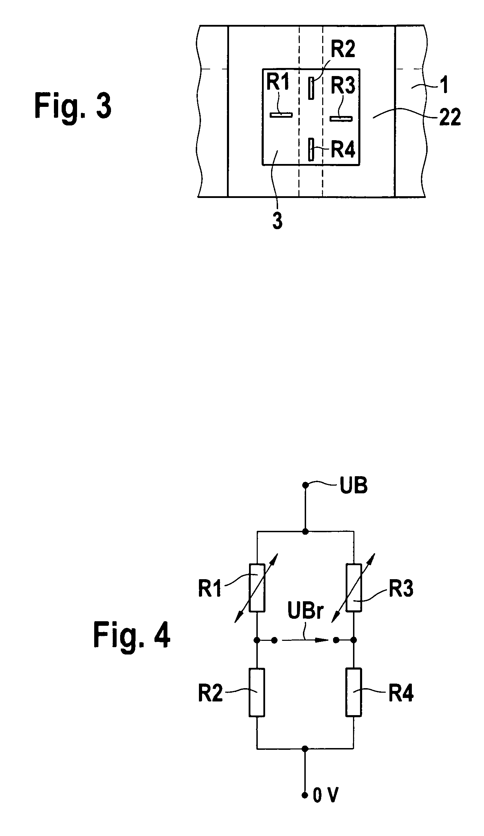

Der Chip 3 ist kraft- und formschlüssig auf die Seitenwandmembran 22 gebondet, wie z.B. durch Kleben oder Löten, vorzugsweise durch Sealglaslöten. Eine derartige Bondschicht bildet eine gute elektrische Isolation zwischen dem Chip 3 und der Seitenwandmembran 22. Die Figuren 2 und 3 veranschaulichen die Anordnung der vier piezoresistiven Dehnungsaufnehmer R1 bis R4 auf dem Chip 3. Aufgrund ihrer Anordnung im Dehnungs- bzw. Stauchbereich der Seitenwandmembran 22 verändern sich der Widerstand der Dehnungsaufnehmer R1 und R3 gegenläufig, wenn ein Differenzdruck vorliegt, d.h. wenn p1 und p2 ungleich sind und die Seitenwandmembran 22 asymmetrisch deformiert wird. Da die Dehnungsaufnehmer R2 und R4 direkt im Stoßbereich der Trennmembran 21 angeordnet sind, ist ihr Widerstand unabhängig vom Differenzdruck p1-p2 innerhalb des Druckrohrs 1. R2 und R4 sind lediglich temperaturabhängig und abhängig von Deformationen der Seitenwandmembran 22, die auf den Gleichanteil der beiden Drücke p1 und p2 zurückzuführen sind. Diese Einflüsse auf das Messsignal UBr können durch Verschaltung von R1 bis R4 in einer Wheatstoneschen Brücke, wie in Fig. 4 dargestellt, kompensiert werden. Ist p1 größer als p2, so ist das Brückensignal UBr positiv und proportional zu p1-p2. Ist p1 kleiner als p2, so ist das Brückensignal UBr negativ und ebenfalls proportional zu p1-p2. Sind p1 und p2 gleich, so wird die Seitenwandmembran 22 allenfalls symmetrisch deformiert. In diesem Fall entsteht kein Brückensignal UBr.

Die Dehnungsaufnehmern R1 bis R4 können in Form einer entsprechenden Dotierung in den Chip 3 integriert sein oder auch in Dünnschichttechnik auf dem Chip 3 realisiert sein. Die Auswerteschaltung kann ebenfalls auf dem Chip 3 angeordnet werden. Es kann aber auch ein eigener separater Chip für die Auswerteschaltung vorgesehen werden.

Die Dehnungsaufnehmer können aber auch in Form von Siliziumwiderständen oder metallischen Widerständen, z.B. aus NiCr, auf einer Trägerfolie realisiert sein, die auf der Außenseite der Seitenwandmembran angeordnet wird. in jedem Fall müssen die Dehnungsaufnehmer kraftschlüssig auf der Seitenwandmembran montiert werden. Dies kann je nach Art der Dehnungsaufnehmer durch eine Bondverbindung wie Kleben oder Löten erfolgen oder auch mit Hilfe eines speziellen Zweikomponentenklebers im Fall von auf PI-Folie basierenden Dehnmessstreifen. Silizium-Dehnungsaufnehmer können auf einen Pyrexsockel gebondet werden oder, im Fall einer Stahlmembran, mit Glaslot aufgelötet werden.

Um eine möglichst gute Übertragung der Deformationen der Trennmembran 21 auf die Seitenwandmembran 22 zu gewährleisten, ist das Druckrohr 1 mit der Trennmembran 21 und der Seitenwandmembran 22 einstückig aus einem einheitlichen Material gefertigt, wie z.B. aus Silizium oder einem anderen Halbleitermaterial, Metall oder Kunststoff. So kann die gesamte Struktur auch mikromechanisch in einem Chip realisiert sein, in dem zwei nebeneinanderliegende Kavernen ausgebildet sind, die durch eine im Schnitt T-förmige Membran voneinander getrennt sind. Vorteilhafterweise sind hier auch die Dehnungsaufnehmer in Form von entsprechenden Dotierungen in den Chip integriert. Die Auswahl des Materials hängt im Wesentlichen vom Einsatzort der Drucksensoranordnung, von der Art der Messmedien und der Umgebungstemperatur ab sowie vom angestrebten Druck-Messbereich der Drucksensoranordnung. Der Durchmesser b1 des Druckrohrs 1 bzw. der Trennmembran 21 liegt üblicherweise in der Größenordnung von 8-10mm, während der Durchmesser b2 der Seitenwandmembran 22 in der Größenordnung von 4-5mm liegt. Der Messbereich der Drucksensoranordnung 10 kann außerdem über die Dicken d1 und d2 der Trennmembran 21 und der Seitenwandmembran 22 beeinflusst werden.

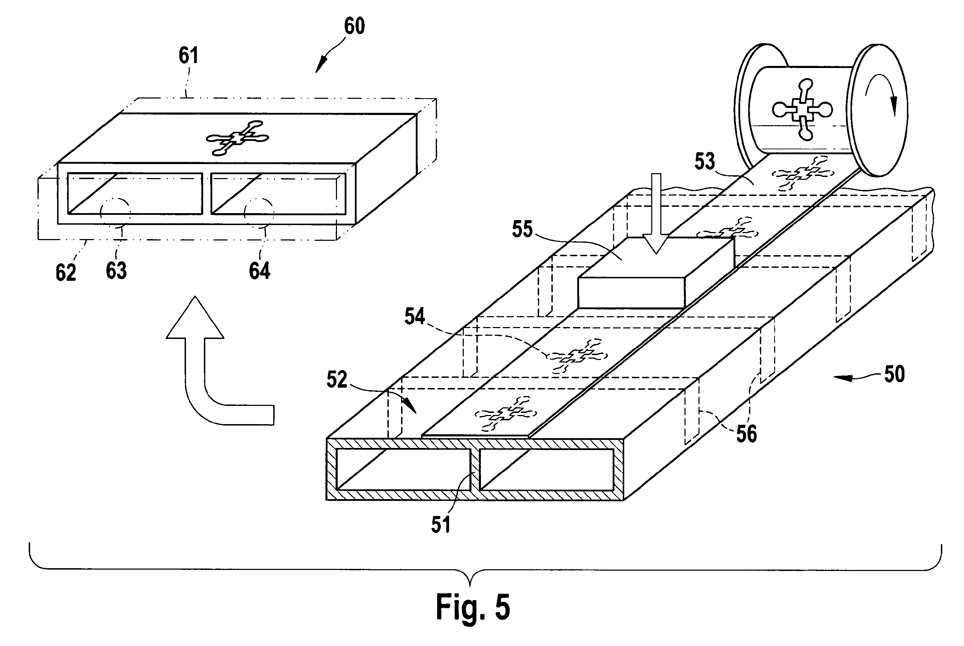

Fig. 5 veranschaulicht eine Möglichkeit der Serienfertigung von erfindungsgemäßen Drucksensoranordnungen ausgehend von einem AI-Stranggussteil 50 mit einem Zweikammerprofil. Die Mittelwand dieses Stranggussteils 50 bildet eine Trennmembran 51, während die Seitenwand über der Mittelwand eine Seitenwandmembran 52 bildet. Im Bereich der Seitenwandmembran 52 über der Trennmembran 51 wird mit Hilfe eines Klebestempels 55 ein Tape 53 mit Dehnmessstreifenanordnungen 54 aufgebracht. Anschlie-βend wird das Stranggussteil 50 an den perforiert gekennzeichneten Trennstellen 56 aufgetrennt. In der linken Bildhälfte ist ein so vereinzeltes Bauteil 60 dargestellt. Das rückwärtige offene Ende des Bauteils 60 wurde mit einem Deckel 61 druckdicht verschlossen. Die Druckzuführung erfolgt über einen zweiten Deckel 62, der auf das vordere offene Ende des Bauteils 60 aufgesetzt ist und mit zwei Druckanschlüssen 63 und 64 versehen ist. An diesen Deckel 62 können nachträglich noch Druckanschlussstutzen angespritzt werden.

## Patentansprüche

1. Drucksensoranordnung mit einem Druckrohr (1), in dem eine Membran (2) als Druckaufnehmer angeordnet ist, und mit Mitteln (3) zum Erfassen der Membrandeformationen,
**dadurch gekennzeichnet,**
- **dass** die Membran (2) mindestens zwei in einem Winkel zueinander orientierte Membranabschnitte (21, 22) umfasst,
- **dass** ein erster Membranabschnitt als Trennmembran (21) im Querschnitt des Druckrohrs (1) angeordnet ist,
- **dass** mindestens ein zweiter Membranabschnitt als Seitenwandmembran (22) einen Bereich der Wandung des Druckrohrs (1) bildet und
- **dass** die Mittel (3) zum Erfassen der Membrandeformationen auf der Außenseite des Druckrohrs (1) auf der Seitenwandmembran (22) angeordnet sind.

2. Drucksensoranordnung nach Anspruch 1, **dadurch gekennzeichnet, dass** die mindestens zwei Membranabschnitte (21, 22) im Wesentlichen senkrecht zueinander orientiert sind, insbesondere so, dass die Membran (2) im Schnitt T-förmig oder H-förmig ausgebildet ist.

3. Drucksensoranordnung nach einem der Ansprüche 1 oder 2, **dadurch gekennzeichnet, dass** das Druckrohr (1), die Trennmembran (21) und die mindestens eine Seitenwandmembran (22) einstückig aus einem einheitlichen Material gefertigt sind.

4. Drucksensoranordnung nach Anspruch 3, **dadurch gekennzeichnet, dass** das Druckrohr (1), die Trennmembran (21) und die Seitenwandmembran (22) aus einem Halbleitermaterial, Metall oder Kunststoff gefertigt sind.

5. Drucksensoranordnung nach einem der Ansprüche 1 bis 4, **dadurch gekennzeichnet, dass** die Mittel (3) zum Erfassen der Membrandeformationen vier Dehnmesselemente (R1 bis R4) umfassen, die zu einer Wheatstoneschen Brücke verschaltet sind.

## Claims

1. Pressure sensor assembly comprising a pressure tube (1), in which a membrane (2) is arranged as a pressure transducer, and comprising means (3) for sensing the deformations of the membrane, **characterized**
- **in that** the membrane (2) comprises at least two membrane portions (21, 22) oriented at an angle in relation to each other,
- **in that** a first membrane portion is arranged as a separating membrane (21) in the cross section of the pressure tube (1),
- **in that** at least one second membrane portion forms a region of the wall of the pressure tube (1) as a side wall membrane (22) and
- **in that** the means (3) for sensing the deformations of the membrane are arranged on the outer side of the pressure tube (1), on the side wall membrane (22).

2. Pressure sensor assembly according to Claim 1, **characterized in that** the at least two membrane portions (21, 22) are oriented substantially perpendicularly in relation to each other, in particular in such a way that the membrane (2) is formed in a T-shaped or H-shaped manner in section.

3. Pressure sensor assembly according to either of Claims 1 and 2, **characterized in that** the pressure tube (1), the separating membrane (21) and the at least one side wall membrane (22) are produced in one piece from one and the same material.

4. Pressure sensor assembly according to Claim 3, **characterized in that** the pressure tube (1), the separating membrane (21) and the side wall membrane (22) are produced from a semiconductor material, metal or plastic.

5. Pressure sensor assembly according to one of Claims 1 to 4, **characterized in that** the means (3) for sensing the deformations of the membrane comprise four strain gauge elements (R1 to R4), which are interconnected to form a Wheatstone bridge.

## Revendications

1. Système de détection de pression doté d'un tube de pression (1) dans lequel une membrane (2) est disposée en tant que récepteur de pression et de moyens (3) de saisie des déformations de membrane,
**caractérisé en ce que**
la membrane (2) comporte au moins deux parties de membrane (21, 22) formant un angle l'une avec l'autre,
**en ce qu'**une première partie de membrane servant de membrane de séparation (21) est disposée à travers la section transversale du tube de pression (1),
**en ce qu'**au moins une deuxième partie de membrane qui forme une membrane (22) de paroi latérale forme une partie de la paroi du tube de pression (1) et
**en ce que** les moyens (3) de saisie des déformations de membrane sont disposés sur le côté extérieur du tube de pression (1), sur la membrane (22) de paroi latérale.

2. Système de détection de pression selon la revendication 1, **caractérisé en ce que** les deux ou plus de deux parties de membrane (21, 22) sont orientées essentiellement à la perpendiculaire l'une de l'autre et en particulier de telle sorte que la membrane (2) présente en coupe la forme d'un T ou d'un H.

3. Système de détection de pression selon l'une des revendications 1 ou 2, **caractérisé en ce que** le tube de pression (1), la membrane de séparation (21) et la ou les membranes (22) de paroi latérale sont réalisés d'un seul tenant en un même matériau.

4. Système de détection de pression selon la revendication 3, **caractérisé en ce que** le tube de pression (1), la membrane de séparation (21) et la membrane (22) de paroi latérale sont réalisés en un matériau semi-conducteur, un métal ou une matière synthétique.

5. Système de détection de pression selon l'une des revendications 1 à 4, **caractérisé en ce que** les moyens (3) de saisie des déformations de membrane comportent quatre éléments (RI à R4) de mesure d'allongement raccordés en pont de Wheatstone.
